# EUROPÄISCHE PATENTSCHRIFT

(11) **EP 2 807 727 B1**
(45) Veröffentlichungstag und Bekanntmachung des Hinweises auf die Patenterteilung: **11.03.2020**
(21) Anmeldenummer: 13702393.3
(22) Anmeldetag: 23.01.2013
(51) Int. Cl.: H02K 3/487, H02K 3/51, H02K 11/00, H02K 15/16

(54) **ROTOR FÜR EINE ROTIERENDE ELEKTRISCHE MASCHINE UND ROTIERENDE ELEKTRISCHE MASCHINE**
ROTOR FOR A ROTATING ELECTRIC MACHINE AND ROTATING ELECTRIC MACHINE
ROTOR POUR MACHINE ÉLECTRIQUE TOURNANTE ET MACHINE ÉLECTRIQUE TOURNANTE

(30) Priorität: 26.01.2012 DE 202012000842 U; 16.02.2012 DE 202012003120 U; 28.02.2012 DE 202012002027 U; 28.02.2012 DE 202012002024 U; 10.04.2012 DE 202012003643 U
(43) Veröffentlichungstag der Anmeldung: 03.12.2014
(73) Patentinhaber: Vitesco Technologies GmbH, 30165 Hannover (DE)
(72) Erfinder: BULATOW, Michael, 10553 Berlin (DE); WELKE, Knut, 73235 Weilheim an der Teck (DE)
(74) Vertreter: Waldmann, Georg Alexander
(86) Internationale Anmeldenummer: PCT/EP2013/051231
(87) Internationale Veröffentlichungsnummer: WO 2013/110652

(56) Entgegenhaltungen:
- EP-A2- 1 967 289
- CH-A- 203 736
- DE-A1- 3 808 311
- DE-A1-102009 051 979
- JP-A- H09 322 457
- JP-B2- 3 458 598
- US-A- 3 311 511

## Beschreibung

Die vorliegende Erfindung betrifft einen Rotor für eine rotierende elektrische Maschine, insbesondere für einen Elektromotor oder einen Generator.

In modernen Kraftfahrzeugen werden zunehmend Elektromotoren verbaut. Sie werden dabei insbesondere als im Antriebsstrang vollintegrierte Antriebsmotoren oder in Hybridanwendungen beispielsweise auch als Startergeneratoren eingesetzt. Dabei kommen zum Teil fremderregte Synchronmaschinen zum Einsatz, die einen Rotor aus einem mit einer Erregerwicklung versehenen Blechpaket aufweisen. Bei derartigen Rotoren sind zwischen den bewickelten Polzähnen Nuten gebildet.

Im Betrieb treten sowohl bei Innen- als auch bei Außenläufern hohe Fliehkräfte auf, die die Erregerwicklung aus den Nuten ziehen könnten. Die Fliehkräfte sind von der Drehzahl und von dem Gewicht der Nutinnenkomponenten abhängig. Insbesondere bei hochdrehenden Maschinen wird die Wicklung daher nach der Montage zusätzlich gesichert. Dazu sind verschiedene Bindemittel bekannt, die als Tränkharze oder Vergussmassen eingesetzt werden. Zusätzlich können Nutstopper oder Nutkeile eingesetzt werden, um ein Herausziehen der Wicklung aus der Nut zu verhindern. Derartige Nutkeile sind beispielsweise aus der Druckschrift DE 28 17 951 A1 bekannt.

Neben fremderregten Synchronmaschinen werden auch Asynchronmaschinen verbaut; insbesondere als Startergeneratoren kommen auch permanenterregte Synchronmaschinen zum Einsatz.

Damit im Betrieb auftretende Wirbelstromverluste reduziert werden, werden Komponenten von elektrischen Maschinen teilweise aus nicht magnetisierbaren Materialien gefertigt. Beispielsweise kommen nicht magnetisierbare und nicht rostende Stähle zum Einsatz, die auch als "Nirosta"-Stähle (z. B. Stahl 1.4301 und 1.4303 gemäß Werkstoffbezeichnung nach Europäischer Norm) bekannt sind. Deren austenitische Struktur wird jedoch beim Umformen, Stanzen oder Schneiden verändert, so dass die Stähle magnetisierbar werden können.

Denkbar wäre für manche Komponenten auch der Einsatz von Kunststoffen. Diese besitzen jedoch in der Regel nicht die notwendigen mechanischen Eigenschaften, um hohen Fliehkräften zu widerstehen.

Die JP H09 322457 A beschreibt einen Rotor einer elektrischen Maschine mit Nutkeilen, wobei die Nutkeile Eisen mit einem Chromanteil von 14 bis 20 Gewichtsprozent, insbesondere von 16 bis 18 Gewichtsprozent aufweisen.

Aufgabe der Erfindung ist es, einen Rotor für eine rotierende elektrische Maschine mit einem Nutkeil anzugeben, der nach einem Umform-, Stanz- oder Schneidprozess unmagnetisierbar bleibt.

Diese Aufgabe wird gelöst durch den Gegenstand des unabhängigen Patentanspruchs 1. Bevorzugte Weiterbildungen der Erfindung sind in den Unteransprüchen angegeben.

Gemäß einem Aspekt der Erfindung wird ein Rotor für eine rotierende elektrische Maschine angegeben, der ein auf einer Rotorwelle angeordnetes Rotorblechpaket aufweist, wobei der Rotor ferner zumindest eine metallische Funktionskomponente aufweist, wobei die Funktionskomponente aus einem Material ausgebildet ist, das Eisen aufweist sowie Chrom in einem Anteil von mindestens 18 und höchstens 19 Gewichtsprozent sowie Nickel in einem Anteil von mindestens 12 und höchstens 13 Gewichtsprozent.

Unter einer Funktionskomponente wird dabei hier und im Folgenden eine Komponente verstanden wie beispielsweise ein Geberrad eines Rotorlagegebers, Gehäuseteile, Wuchtelemente, Wickelkopfabdeckungen oder Nutkeile.

Erfindungsgemäß weist das Material die Legierungszusammensetzung Fe_{Rest}CrₐNi_{b}Mn_{c}C_{d}SiₑP_{f}S_{g}Nₕ auf, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt. Daneben kann das Material fertigungstypische Verunreinigungen mit anderen Stoffen aufweisen. Gegenüber bekannten nicht rostenden Stählen, beispielsweise den Stählen 1.4301 oder 1.4303, weist dieses Material einen besonders hohen Anteil an Chrom und Nickel auf. Es hat sich gezeigt, dass Werkstücke aus diesem Stahl, im Gegensatz zu Werkstücken aus bekannten nicht rostenden Stählen, aufgrund ihres relativ hohen Anteils an Chrom und Nickel auch nach dem Umformen, Stanzen oder Schneiden unmagnetisierbar bleiben.
Dieses Material eignet sich demnach für Funktionskomponenten eines Elektromotors, die häufig mittels Verfahren wie Tiefziehen, Stanzen oder Drehen hergestellt werden und dabei beträchtliche Umformungen erfahren. Durch die Erhaltung der Unmagnetisierbarkeit auch bei derartigen Prozessen werden Wirbelstromverluste reduziert.
Dieser Stahl ist zudem ausreichend fest, so dass die Funktionskomponenten die für hohe Belastungen notwendige Festigkeit aufweisen.

Ein derartiger Rotor ist somit auch für hohe Drehzahlen von 10 000 Umdrehungen pro Minute und mehr geeignet.

In einer Ausführungsform ist zumindest eine zweite Funktionskomponente als Wuchtelement ausgebildet.
Unter einem Wuchtelement wird ein Bauteil verstanden, dem bei einem Unwuchtausgleich am Rotor Material entfernt oder hinzugefügt werden kann, bis der Schwerpunkt in den Wuchtebenen annähernd auf der Drehachse des Rotors liegt. Ein solcher Unwuchtausgleich wird typischerweise durchgeführt, weil der Rotor nach seiner Fertigung aufgrund von Toleranzen in den Bauteilen sowie aufgrund unvermeidbarer Ungleichmäßigkeiten in den Fertigungsprozessen nicht vollständig rotationssymmetrisch ist. Es können auch mehrere Wuchtelemente an einem Rotor vorgesehen sein, die häufig als konzentrisch zur Rotorwelle angeordnete Wuchtringe ausgebildet sind.

In einer Ausführungsform ist zumindest eine dritte Funktionskomponente als Geberrad eines Rotorlagegebers ausgebildet.
Das Geberrad des Rotorlagegebers weist eine Geberkontur, auch Sensorspur genannt, auf, die zusammen mit einem ortsfest am Motorgehäuse angeordneten und sich demnach nicht mit dem Rotor drehenden Sensorelement zusammen den Sensor ausbildet.
Erfindungsgemäß ist der Rotor als Rotor einer fremderregten Synchronmaschine ausgebildet und weist eine Anzahl von eine Erregerwicklung tragenden Polzähnen auf. Zwischen den Polzähnen sind jeweils Nuten gebildet.

In einer Ausführungsform ist zumindest eine weitere Funktionskomponente als Wickelkopfabdeckung der Erregerwicklung ausgebildet.
Unter der Wickelkopfabdeckung wird hier und im folgenden eine Abdeckung der Wickelköpfe der Erregerwicklung des Rotors verstanden, die das Rotorblechpaket in axialer Richtung abschließt. Wickelkopfabdeckungen können an beiden Enden des Rotors vorgesehen sein.
Erfindungsgemäß sind die Funktionskomponenten als in den Nuten angeordnete und die Nuten nach außen abschließende Nutkeile ausgebildet.
Die Nutkeile sichern im Betrieb die Erregerwicklungen zusätzlich. Sie können in den Polzähnen formstabil festgeklemmt sein. Dazu sind in den Polzähnen Ausnehmungen als Halterungen vorgesehen, die Randabschnitte der Nutkeile aufnehmen.
In einer Ausführungsform ist die Erregerwicklung von einer Vergussmasse umgeben. Dazu wird nach der Montage des Rotors, nach Aufbringen der Wicklungen und Montieren der Nutkeile die elektrisch isolierende Vergussmasse, beispielsweise ein Vergussharz bzw. Epoxidharz wie Araldit oder ein Kunststoff, in die Hohlräume innerhalb der Nuten des Rotors eingebracht und härtet aus. In einer Ausführungsform sind die Hohlräume innerhalb der Nuten im Wesentlichen vollständig mit einer Vergussmasse vergossen.
Bei derartigen Rotoren sind die Nutinnenkomponenten, insbesondere die Erregerwicklung, besonders gut gegen im Betrieb auftretende Fliehkräfte gesichert.
Alternativ kann die Erregerwicklung auch von einer Tränkmasse, beispielsweise einem Tränkharz, umgeben sein. Beim Tränken wird der Rotor in die Tränkmasse getaucht und anschließend getrocknet. Dabei werden alle Nutkomponenten zusammengeklebt, der Rest der Tränkmasse tropft ab. Die Rotornuten werden dabei typischerweise nicht vollständig aufgefüllt.

Unter den Funktionskomponenten, welche aus dem Material ausgebildet ist, das neben Eisen Chrom in einem Anteil von mindestens 18 und höchstens 19 Gewichtsprozent sowie Nickel in einem Anteil von mindestens 12 und höchstens 13 Gewichtsprozent aufweist, können auch Komponenten der elektrischen Maschine wie z. B. das Rotorblechpacket an sich, die Rotorwelle, der Lagerschild, der Wuchtring aber auch das Statorblechpacket, das Statorgehäuse usw. gehören.
Gemäß einem Aspekt der Erfindung wird ein Elektromotor mit dem beschriebenen Rotor angegeben. Der Elektromotor kann insbesondere als fremderregte Synchronmaschine ausgebildet sein. Er kann sowohl als Innen- als auch als Außenläufer ausgebildet sein. Der Elektromotor kann auch als permanenterregte Synchronmaschine oder als Asynchronmaschine ausgebildet sein (nicht Teil der beanspruchten Erfindung).
Da die Nutinnenkomponenten wirksam gegen auftretende Fliehkräfte gesichert sind und die Funktionskomponenten des Rotors eine hohe Festigkeit aufweisen, kann der Elektromotor für Drehzahlen von 10 000 Umdrehungen pro Minute und mehr ausgelegt sein.
Derartige Elektromotoren eignen sich für die Verwendung in einem Kraftfahrzeug. Sie können sowohl als im Antriebsstrang vollintegrierte Antriebsmotoren, beispielsweise als Radnaben- oder Achsmotoren, als auch beispielsweise als Startergeneratoren eingesetzt werden. Gemäß einem Aspekt der Erfindung wird deshalb ein Kraftfahrzeug angegeben, das den beschriebenen Elektromotor aufweist. Das Kraftfahrzeug kann dabei als Elektro- oder Hybridfahrzeug ausgebildet sein.

Ausführungsbeispiele werden nun anhand der Zeichnungen näher erläutert.
- Figur 1: zeigt schematisch einen Querschnitt durch einen Elektromotor mit einem Rotor gemäß einer ersten Ausführungsform der Erfindung;
- Figur 2: zeigt schematisch eine perspektivische Ansicht des Elektromotors gemäß Figur 1;
- Figur 3: zeigt schematisch einen Längsschnitt durch einen Bereich des Rotors gemäß einer zweiten Ausführungsform;
- Figur 4: zeigt schematisch einen Längsschnitt durch einen Bereich des Rotors gemäß einer dritten Ausführungsform und
- Figur 5: zeigt eine Tabelle mit einer Legierungszusammensetzung gemäß einer Ausführungsform der Erfindung.

Gleiche Teile sind in allen Figuren mit denselben Bezugszeichen versehen.

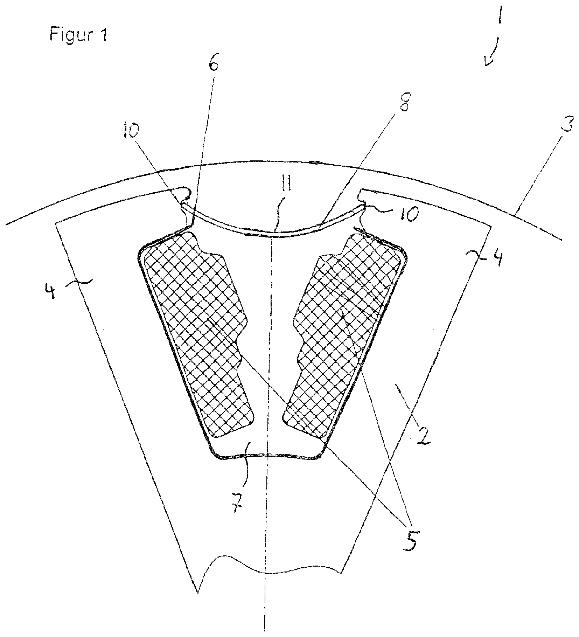

Figur 1 zeigt schematisch einen Querschnitt durch einen Elektromotor 1 mit einem als Blechpaket ausgebildeten Rotor 2 und einem den Rotor 2 umgebenden Stator 3.

In der gezeigten Ausführungsform ist der Elektromotor 1 als fremderregte Synchronmaschine ausgebildet. Der Rotor 2 weist eine Anzahl von Polzähnen 4 auf, zwischen denen Nuten 7 gebildet sind. Die Polzähne 4 tragen Erregerwicklungen 5, die von den Polzähnen 4 durch ein Nutisolierpapier 6 elektrisch isoliert sind. Es kann auch eine andere Form der Isolierung, beispielsweise ein Umspritzen mit einem Kunststoff, gewählt werden. Die Nut 7 wird nach außen hin abgeschlossen durch einen Nutkeil 8. Der Nutkeil 8 ist aus einem nicht magnetisierbaren Material ausgebildet und weist die Legierungszusammensetzung Fe_{Rest}Crₐ-Ni_{b}Mn_{c}C_{d}SiₑP_{f}S_{g}Nₕ auf, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.
In der gezeigten Ausführungsform ist der Nutkeil 8 konkav ausgebildet mit einer Aufwölbung 11 zum Innern des Rotors 2 hin. Der Nutkeil 8 kann aber auch eine konvexe oder andere Form haben (nicht Teil der beanspruchten Erfindung).
Mit seinen Randbereichen ist der Nutkeil 8 in Ausnehmungen 10 in den Polzähnen 4 aufgenommen und gehaltert. Der Nutkeil 8 sichert die Erregerwicklung 5 zusätzlich gegen im Betrieb auftretende Fliehkräfte.

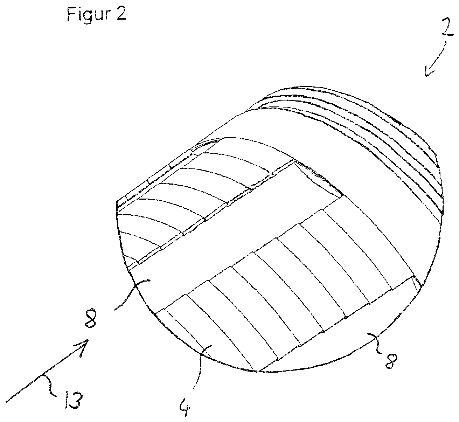

Figur 2 zeigt eine perspektivische Ansicht des Rotors 2. In dieser Ansicht sind die zwischen den Polzähnen 4 sich erstreckenden Nutkeile 8 erkennbar. Die Nutkeile 8 erstrecken sich axial, das heißt in Richtung des Pfeils 13 über die ganze Länge der Nut 7. Derartige Nutkeile 8 können auch bei geschrägten Nuten 7 vorgesehen sein, die dann dem schrägen Verlauf der Nuten 7 folgen. Die Nutkeile 8 werden nach Aufbringen der Erregerwicklungen 5 montiert. Sie können sowohl axial als auch radial montiert werden. Dabei können sowohl ungebogene Bleche - beispielsweise vom Coil abgewickelt und während der Montage umgeformt - als auch vorgebogene Teile verwendet werden. Nach der Montage der Nutkeile 8 werden die verbleibenden Hohlräume der Nuten 7 mit einer nicht gezeigten Vergussmasse vergossen.

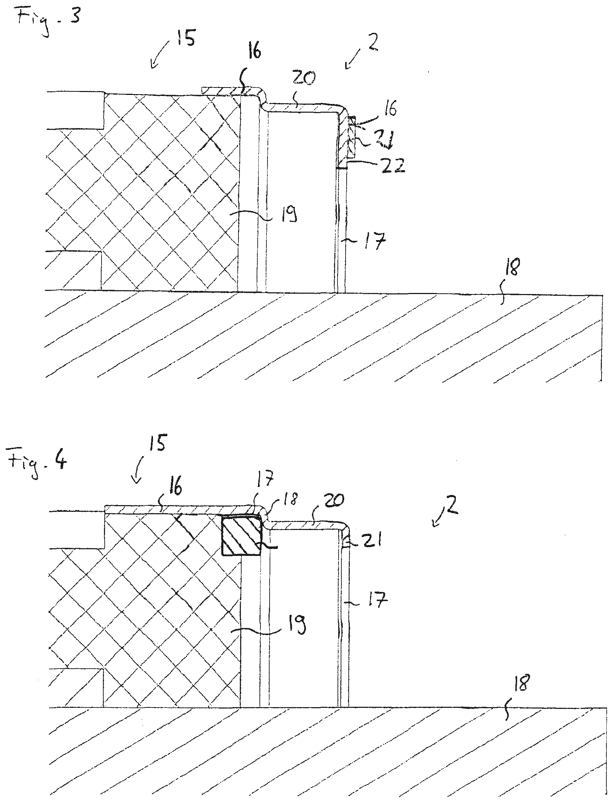

Figur 3 zeigt schematisch einen Längsschnitt durch einen Bereich des Rotors 2 gemäß einer zweiten Ausführungsform.

Im Bereich der Wickelköpfe 15 ist jeweils eine im Tiefziehverfahren hergestellte Wickelkopfabdeckung 16 vorgesehen. Diese umgibt beide Enden des Rotorblechpakets und die Erregerwicklung 5 und weist eine zentrale Öffnung 17 zur Durchführung der Rotorwelle 18 auf. Die Rotorwelle 18 ist mit dem Rotor 2 drehfest verbunden und in einem nicht gezeigten Gehäuse der elektrischen Maschine drehbar gelagert. Eine Wickelkopfabdeckung 16 kann auch nur an einem Ende des Rotors 2 vorgesehen sein.

Die Wickelkopfabdeckung 16 schließt das Rotorblechpaket in axialer Richtung ab.

Die Wickelkopfabdeckung 16 besteht aus einem unmagnetisierbaren Stahl mit der Legierungszusammensetzung Fe_{Rest}CrₐNi_{b}Mn_{c}C_{d}SiₑP_{f}S_{g}Nₕ, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

Zur Stabilisierung der Erregerwicklung im Betrieb ist der Rotor 2 in einem Spritzgießverfahren mit einer Kunststoffmasse 19 vergossen. In der Kunststoffmasse 19 ist die nicht gezeigte Erregerwicklung eingebettet. Die Kunststoffmasse 19 weist eine Grenzfläche zu der Wickelkopfabdeckung 16 auf.

Der Rotor 2 weist ein Geberrad 20 eines Rotorlagegebers auf, das in dieser Ausführungsform einstückig mit der Wickelkopfabdeckung 16 ausgebildet ist. Bei dieser Ausführungsform ist eine Geberkontur 21 auf der Stirnseite 22 des Geberrads 20 aufgebracht. Das Geberrad 20 und/oder die Geberkontur 21 bestehen in dieser Ausführungsform wie die Wickelkopfabdeckung 16 aus einem unmagnetisierbaren Stahl mit der Legierungszusammensetzung Fe_{Rest}CrₐNi_{b}Mn_{c}C_{d}SiₑP_{f}S_{g}Nₕ, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

Figur 4 zeigt schematisch einen Längsschnitt durch einen Bereich des Rotors 2 gemäß einer dritten Ausführungsform. Bei dieser Ausführungsform ist das Geberrad 20 ebenfalls einstückig mit der Wickelkopfabdeckung 16 ausgebildet. Es kann jedoch auch als separates Teil ausgebildet sein. Die Geberkontur 21 ist in dieser Ausführungsform als nach innen gezogener Bereich ausgebildet. Der Rotor 2 weist ferner ein Wuchtelement in Form eines Wuchtrings 23 auf. Der Wuchtring 23 ist auf der Innenseite der Wickelkopfabdeckung 16 angeordnet und aus einem unmagnetisierbaren Stahl mit der Legierungszusammensetzung Fe_{Rest}CrₐNi_{b}Mn_{c}C_{d}SiₑP_{f}S_{g}Nₕ ausgebildet, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.
Der Wuchtring 23 wird mit dem Tiefziehteil, das die Funktionalitäten der Wickelkopfabdeckung 16 und des Geberrads 20 in sich vereinigt, beispielsweise mittels Einrollieren, Verstemmen oder Einpressen verbunden. Als Anschlag für den Wuchtring 23 kann dabei zum Beispiel der Boden oder ein Absatz im Tiefziehteil dienen.

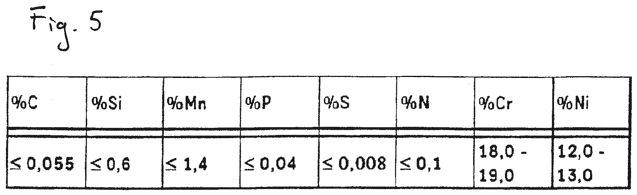

Figur 5 zeigt eine Tabelle mit einer Legierungszusammensetzung, die erfindungsgemäß für verschiedene Funktionskomponenten des Rotors 2 verwendet werden kann. Gegenüber bekannten nichtrostenden Stählen weist diese Legierung einen besonders hohen Anteil an Nickel und Chrom auf. Es hat sich gezeigt, dass dadurch die austenitische Struktur des Stahls auch nach dem Umformen unbeschädigt bleibt. Daher ist dieser Stahl auch nach dem Umformen unmagnetisierbar und aufgrund der geringen Wirbelstromverluste besonders für den Einsatz in dem Rotor 2 geeignet.

Obwohl zumindest eine beispielhafte Ausführungsform in der vorhergehenden Beschreibung gezeigt wurde, können verschiedene Änderungen und Modifikationen im Rahmen des Schutzbereichs der angefügten Ansprüche vorgenommen werden.

### Bezugszeichenliste

- 1: Elektromotor
- 2: Rotor
- 3: Stator
- 4: Polzahn
- 5: Erregerwicklung
- 6: Nutisolierpapier
- 7: Nut
- 8: Nutkeil
- 10: Ausnehmung
- 11: Aufwölbung
- 15: Wickelkopf
- 16: Wickelkopfabdeckung
- 17: zentrale Öffnung
- 18: Rotorwelle
- 19: Kunststoffmasse
- 20: Geberrad
- 21: Geberkontur
- 22: Stirnseite
- 23: Wuchtring

## Patentansprüche

1. Rotor (2) für eine rotierende elektrische Maschine, der ein auf einer Rotorwelle (18) angeordnetes Rotorblechpaket aufweist, wobei der Rotor (2) als Rotor (2) einer fremderregten Synchronmaschine ausgebildet ist und
- eine Anzahl von eine Erregerwicklung (5) tragenden Polzähnen (4) aufweist, wobei
- zwischen den Polzähnen (4) jeweils Nuten (7) gebildet sind, wobei
der Rotor (2) ferner zumindest eine metallische Funktionskomponente aufweist, wobei
die zumindest eine Funktionskomponente aus einem Material ausgebildet ist, das
- Eisen aufweist sowie
- Chrom in einem Anteil von mindestens 18 und höchstens 19 Gewichtsprozent, und zumindest erste Funktionskomponenten als in den Nuten (7) angeordnete und die Nuten (7) nach außen abschließende Nutkeile (8) ausgebildet sind,
**dadurch gekennzeichnet, dass**
die Nutkeile (8) konkav ausgebildet sind und eine Aufwölbung (11) zum Innern des Rotors (2) hin aufweisen, wobei der Nutkeil (8) aus einem nicht magnetisierbaren Material ausgebildet ist und die Legierungszusammensetzung Fe_{Rest}-CrₐNi_{b}Mn_{c}C_{d}SiₑP_{f}S_{g}Nₕ aufweist, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

2. Rotor (2) nach Anspruch 1,
wobei zumindest eine zweite Funktionskomponente als Wuchtelement ausgebildet ist.

3. Rotor (2) nach einem der Ansprüche 1 oder 2,
wobei zumindest eine dritte Funktionskomponente als Geberrad (20) eines Rotorlagegebers ausgebildet ist.

4. Rotor (2) nach einem der Ansprüche 1 bis 3,
wobei die Erregerwicklung (5) von einer Vergussmasse umgeben ist.

5. Rotor (2) nach einem der Ansprüche 1 bis 4,
wobei die Hohlräume innerhalb der Nuten (7) im Wesentlichen vollständig mit einer Vergussmasse vergossen sind.

6. Rotierende elektrische Maschine mit einem Rotor (2) nach einem der Ansprüche 1 bis 5.

## Claims

1. Rotor (2) for a rotating electric machine, having a laminated rotor core arranged on a rotor shaft (18), wherein
the rotor (2) is formed as a rotor (2) of a separately excited synchronous machine and
- has a number of pole teeth (4) bearing an exciter winding (5), wherein
- slots (7) are respectively formed between the pole teeth (4), wherein
the rotor (2) also has at least one metallic functional component, wherein
the at least one functional component is formed from a material that
- includes iron, and
- chromium in a proportion of at least 18 and at most 19 percent by weight, and
at least first functional components are formed as slot wedges (8) arranged in the slots (7) and closing off the slots (7) towards the outside,
**characterized in that**
the slot wedges (8) are of concave form and have a bulge (11) towards the interior of the rotor (2), wherein
the slot wedge (8) is formed from a non-magnetizable material and has the alloy composition Fe_{remainder}CrₐNi_{b}Mn_{c}C_{d}SiₑP_{f}S_{g}Nₕ, wherein a, b, c, d, e, f, g and h are given in percent by weight and 18 ≤ a ≤ 19; 12 ≤ b ≤ 13; 0 ≤ c ≤ 1.4; 0 ≤ d ≤ 0.055; 0 ≤ e ≤ 0.6; 0 ≤ f ≤ 0.04; 0 ≤ g ≤ 0.008 and 0 ≤ h ≤ 0.1.

2. Rotor (2) according to Claim 1,
wherein at least one second functional component is formed as a balancing element.

3. Rotor (2) according to either of Claims 1 and 2,
wherein at least one third functional component is formed as an encoder wheel (20) of a rotor position encoder.

4. Rotor (2) according to one of Claims 1 to 3,
wherein the exciter winding (5) is surrounded by a potting compound.

5. Rotor (2) according to one of Claims 1 to 4,
wherein the cavities within the slots (7) are potted substantially completely with a potting compound.

6. Rotating electric machine having a rotor (2) according to one of Claims 1 to 5.

## Revendications

1. Rotor (2) pour une machine électrique tournante, qui présente un empilage de tôles de rotor disposé sur un arbre de rotor (18), le rotor (2) étant réalisé sous forme de rotor (2) d'une machine synchrone à excitation séparée, et
- présentant une pluralité de dents polaires (4) portant un enroulement excitateur (5),
- des rainures (7) étant à chaque fois formées entre les dents polaires (4),
le rotor (2) présentant en outre au moins un composant fonctionnel métallique,
l'au moins un composant fonctionnel étant réalisé à partir d'un matériau qui
- présente du fer ainsi que
- du chrome dans une proportion d'au moins 18, et d'au plus 19, pour cent en poids, et
au moins des premiers composants fonctionnels étant réalisés sous forme de clavettes de rainure (8) disposées dans les rainures (7) et fermant les rainures (7) vers l'extérieur, **caractérisé en ce que**
les clavettes de rainure (8) sont réalisées sous forme concave et présentent une courbure (11) vers l'intérieur du rotor (2), la clavette de rainure (8) étant réalisée en un matériau non aimantable et la composition de l'alliage présentant du Fe_{Rest}-CrₐNi_{b}Mn_{c}C_{d}SiₑP_{f}S_{g}Nₕ, où a, b, c, d, e, f, g et h sont indiqués en pourcentage en poids et 18 ≤ a ≤ 19 ; 12 ≤ b ≤ 13 ; 0 ≤ c ≤ 1,4 ; 0 ≤ d ≤ 0,055 ; 0 ≤ e ≤ 0,6 ; 0 ≤ f ≤ 0,04 ; 0 ≤ g ≤ 0,008 et 0 ≤ h ≤ 0,1.

2. Rotor (2) selon la revendication 1,
dans lequel au moins un deuxième composant fonctionnel est réalisé sous forme d'élément d'équilibrage.

3. Rotor (2) selon l'une quelconque des revendications 1 et 2,
dans lequel au moins un troisième composant fonctionnel est réalisé sous forme de roue phonique (20) d'un capteur de position du rotor.

4. Rotor (2) selon l'une quelconque des revendications 1 à 3,
dans lequel l'enroulement excitateur (5) est entouré par une masse de scellement.

5. Rotor (2) selon l'une quelconque des revendications 1 à 4,
dans lequel les cavités à l'intérieur des rainures (7) sont remplies essentiellement complètement avec une masse de scellement.

6. Machine électrique tournante comprenant un rotor (2) selon l'une quelconque des revendications 1 à 5.
